# EUROPÄISCHE PATENTSCHRIFT

(11) **EP 0 693 512 B1**
(45) Veröffentlichungstag und Bekanntmachung des Hinweises auf die Patenterteilung: **06.10.1999**
(21) Anmeldenummer: 95110707.7
(22) Anmeldetag: 10.07.1995
(51) Int. Cl.: C08G 18/79, C08G 18/72, C09D 175/04, E04D 7/00

(54) **Lichtechte, lösemittelfreie Polyurethan-Beschichtungsmittel und ihre Verwendung**
Light-stable solventless polyurethane coating agents and their use
Agents de revêtement de polyuréthane stables à la lumière et exempts de solvant et leur utilisation

(30) Priorität: 22.07.1994 DE 4426131
(43) Veröffentlichungstag der Anmeldung: 24.01.1996
(73) Patentinhaber: BAYER AG, 51368 Leverkusen (DE)
(72) Erfinder: Rettig, Rainer, Dr., D-51515 Kürten (DE); Hentschel, Karl-Heinz, Dr., D-51429 Bergisch Gladbach (DE); Walter, Ulric1, Dipl.-Ing., D-40764 Langenfeld (DE); Ruttmann, Gerhard, D-51399 Burscheid (DE); Laas, Hans-Josef, Dr., D-50733 Köln (DE); Schmalstieg, Lutz, Dr., D-50676 Köln (DE); Halpaap, Reinhard, Dr., D-51519 Odenthal (DE); Mertes, Harald, Dr., D-50670 Köln (DE)

(56) Entgegenhaltungen:
- EP-A- 0 047 452
- EP-A- 0 339 396
- EP-A- 0 478 990
- EP-A- 0 535 483
- US-A- 5 137 972

## Beschreibung

Die Erfindung betrifft neue lösemittelfreie Zweikomponenten-Polyurethan-Beschichtungsmittel und ihre Verwendung zur Beschichtung beliebiger Substrate, insbesondere zur Balkon- oder Dachabdichtung.

Lösemittelfreie Zweikomponenten-Polyurethan-Beschichtungsmittel (2K-PUR) lassen sich im Gegensatz zu lösemittelhaltigen Lacken in nahezu beliebig hohen Auftragsstärken verarbeiten. Sie finden heute im wesentlichen im Baubereich zur Herstellung dickschichtiger Überzüge, beispielsweise zur Beschichtung mechanisch stark beanspruchter Flächen, wie z.B. Fußböden, zur Balkonabdichtung aber auch im Korrosionsschutz Verwendung.

Lösemittelfreie 2K-PUR-Beschichtungen erfordern flüssige, niedrigviskose Reaktionspartner. Während eine Reihe geeigneter Polyole mit ausreichend niedriger Viskosität, beispielsweise Polyetherpolyole oder wenig verzweigte Polyesterpolyole, zur Verfügung stehen, kommen in der Praxis als Vernetzerkomponenten im allgemeinen nur flüssige, undestillierbare Diphenylmethandiisocyanat(MDI)-Typen zum Einsatz. Diese niedrigviskosen MDI-Polyisocyanate stellen zwar hochreaktive Vernetzer dar, die mit ihrer Hilfe erhältlichen Beschichtungen neigen jedoch insbesondere bei Bewitterung zu Vergilbung und Kreidung und sind für Außenanwendungen daher nur bedingt geeignet (Kunststoff-Handbuch Band 7; Polyurethane, 2. Auflage, Hrsg: G. Oertel; Hanser Verlag, München, Wien 1983, S. 556 bis 558).

Die Herstellung licht- und wetterbeständiger 2K-PUR-Lacke ist nur unter Verwendung (cyclo)aliphatischer Polyisocyanatvernetzer möglich. Lösemittelfreie Beschichtungsmittel, die als Vernetzerkomponenten niedrigviskose Polyisocyanate mit ausschließlich aliphatisch bzw. cycloaliphatisch gebundenen Isocyanatgruppen enthalten, sind Gegenstand der DE-AS 23 04 893, wobei als geeignete Vernetzer beispielsweise Biuretpolyisocyanate auf Basis von 1,6-Diisocyanatohexan (HDI) oder auch spezielle Uretdion- und Isocyanuratgruppen aufweisende HDI-Polyisocyanate genannt werden. Auch diese Beschichtungsmittel können jedoch nicht sämtlichen Anforderungen der Praxis gerecht werden.

Mit Hilfe von Polyisocyanaten auf Basis linearaliphatischer Diisocyanate, wie z.B. HDI, lassen sich zwar lichtechte Beschichtungen hoher Elastizität herstellen, ihrem breiten Einsatz in lösemittelfreien Lacksystemen stehen jedoch die nur geringe Härte und unzureichende Abriebbeständigkeit der erhaltenen Filme sowie deren zu langsame Trocknung entgegen.

Lackfilme, die mit Polyisocyanaten auf Basis cycloaliphatischer Diisocyanate ausgehärtet werden, zeichnen sich hingegen im allgemeinen durch hohe Härte, hervorragende Beständigkeiten gegen mechanische oder chemische Einflüsse sowie eine sehr rasche physikalische Antrocknung aus. Sie erweisen sich aber gleichzeitig für eine Reihe von Anmeldungen als zu spröde und zu wenig elastisch.

Ein weiterer Nachteil der bekannten cycloaliphatischen Lackpolyisocyanate des Standes der Technik, beispielsweise solcher mit Biuretstruktur der in der DE-OS 30 30 655 genannten Art, mit Isocyanuratstruktur der in EP-A-0 003 765, -0 017 998 und -0 193 828 genannten Art oder Uretdion- und gegebenenfalls Isocyanuratstruktur der in der DE-OS 1 934 764 oder in EP-A-0 049 998 bzw. -0 317 744 genannten Art, ist, daß diese bei Raumtemperatur hochviskose oder feste Harze darstellen, die in lösemittelfreier Form nicht als Vernetzer eingesetzt werden können. Die DE-AS 23 04 893 beschreibt daher als zur Herstellung von lösemittelfreien Beschichtungsmitteln geeignete Polyisocyanate mit cycloaliphatisch gebundenen Isocyanatgruppen auch ausschließlich monomere, flüssige Diisocyanate, wie z.B. 1-Methyl-2,4-diisocyanatocyclohexan, 1-Methyl-2,6-diisocyanatocyclohexan sowie Gemische dieser beiden Isomeren, Diisocyanatocyclohexane oder 3,3,5-Trimethyl-5-isocyanatomethyl-cyclohexylisocyanat (Isophorondiisocyanat; IPDI). Der Einsatz solcher monomeren niedermolekularen Diisocyanate zur Vernetzung zweikomponentiger Polyurethanlacke verbietet sich jedoch in der Praxis aufgrund der bekannten Toxizität dieser Verbindungen.

Aus den EP-A 47452, EP-A 339396, EP-A 478990 und EP-A 535483 ist bekannt, daß Polyisocyanate, die Isocyanuratgruppen enthalten, zur Herstellung von Polyurethanlacken verwendet werden können.

Die der vorliegenden Erfindung zugrundeliegende Aufgabe bestand nur darin, neue Zweikomponenten-Polyurethan-Beschichtungsmittel zur Verfügung zu stellen, die toxikologisch unbedenkliche Vernetzerkomponenten enthalten, sich lösernittelfrei verarbeiten lassen und rasch bei den unterschiedlichsten Umgebungsbedingungen zu licht- und wetterbeständigen Lackfilmen aushärten, die die gute Elastizität von mit HDI-Polyisocyanaten vernetzten Beschichtungen mit der hohen Härte und Abriebfestigkeit solcher auf Basis cycloaliphatischer Polyisocyanate in sich vereinigen.

Diese Aufgabe konnte mit der Bereitstellung der nachstehend näher beschriebenen erfindungsgemäßen Zweikomponenten-Polyurethan-Beschichtungsmittel gelöst werden. Die nachfolgend näher beschriebenen erfindungsgemäßen lösemittelfreien Zweikomponenten-Polyurethan-Beschichtungsmittel basieren auf der überraschenden Beobachtung, daß sich unter Verwendung spezieller, aus einem Gemisch aus niedrigviskosen Polyisocyanaten auf HDI-Basis und Isocyanuratpolyisocyanaten auf Basis cycloaliphatischer Diisocyanate bestehender Polyisocyanatkomponenten lichtechte, wetterfeste Beschichtungen mit ausgezeichneter Härte und Abriebbeständigkeit herstellen lassen, die hinsichtlich Elastizität und Reißfestigkeit die hervorragenden mechanischen Eigenschaften von mit reinen HDI-Polyisocyanaten vernetzten Lacken sogar noch übertreffen.

Dies war überraschend, da allgemein bekannt ist, daß sich mit Hilfe cycloaliphatischer Vernetzer zwar die Härte von Polyurethan-Beschichtungen erhöhen läßt, dabei gleichzeitig aber die Elastizität zurückgeht. Es war daher keineswegs zu erwarten, daß unter Verwendung spezieller Kombinationen aus niedrigviskosen HDI-Polyisocyanaten und Isocyanuratpolyisocyanaten auf Basis cycloaliphatischer Diisocyanate Lackfilme erhalten werden, die nicht nur eine höhere Härte sondern zugleich eine gegenüber von mit reinen HDI-Polyisocyanaten vernetzten Lacken gesteigerte Elastizität aufweisen.

Zwar ist der Einsatz niedrigviskoser HDI-Uretdione als Reaktivverdünner für andere, höherviskose oder feste Polyisocyanatkomponenten und die Verwendung der resultierenden Gemische in lösemittelfreien Polyurethanlack-Systemen bereits in der DE-OS 34 37 635 pauschal erwähnt, der Fachmann konnte dieser Veröffentlichung jedoch keinerlei konkreten Hinweis dahingehend entnehmen, daß sich unter Verwendung spezieller Gemische aus niedrigviskosen HDI-Polyisocyanaten, beispielsweise solchen mit Uretdionstruktur, und cycloaliphatischen Isocyanuratpolyisocyanaten lösemittelfreie Zweikomponenten-Polyurethan-Beschichtungen herstellen lassen, die hinsichtlich Elastizität und Reißfestigkeit das hohe Eigenschaftsniveau von mit HDI-Polyisocyanaten vernetzten Lacke sogar noch übertreffen.

Gegenstand der vorliegenden Erfindung sind lösemittelfreie Zweikomponenten-Polyurethan-Beschichtungsmittel, bestehend im wesentlichen aus
A) einer Polyisocyanatkomponente,
B) einer Polyolkomponente und gegebenenfalls
C) in der Beschichtungstechnologie üblichen Hilfs- und Zusatzstoffen,
wobei die Komponenten A) und B) in, einem NCO/OH-Äquivalentverhältnis von 0,7:1 bis 1,5:1 entsprechenden, Mengen vorliegen, dadurch gekennzeichnet,
daß die Polyisocyanatkomponente A) eine Viskosität bei 23°C von 500 bis 12000 mPas, einen Gehalt an Isocyanatgruppen von 13 bis 24 Gew.-% und einen Gehalt an monomeren Diisocyanaten von weniger als 0,5 Gew.-% aufweist und aus einem Gemisch aus
A1) 50 bis 95 Gew.-% an Lackpolyisocyanaten auf Basis von 1,6-Diisocyanatohexan mit einer Viskosität bei 23°C von 100 bis 4000 mPa.s und einem Gehalt an Isocyanatgruppen von 16 bis 24 Gew.-% und
A2) 5 bis 50 Gew.-% an Isocyanuratgruppen aufweisenden Polyisocyanaten auf Basis cycloaliphatischer Diisocyanate
besteht.

Gegenstand der Erfindung ist auch die Verwendung dieser Zweikomponenten-Polyurethan-Beschichtungsmittel zur lösemittelfreien Beschichtung beliebiger Substrate, insbesondere zur lösungsmittelfreien Balkon- oder Dachabdichtung.

Die in den erfindungsgemäßen Beschichtungsmassen vorliegende Polyisocyanatkomponente A) besteht aus einem Gemisch aus
50 - 95 Gew.-% an Polyisocyanaten auf Basis von 1,6-Diisocyanatohexan A1) und
5 - 50 Gew.-% an Isocyanuratgruppen aufweisenden Polyisocyanaten auf Basis cycloaliphatischer Diisocyanate A2).

Bei den Polyisocyanaten A1) handelt es sich um an sich bekannte Lackpolyisocyanate auf HDI-Basis mit einer Viskosität bei 23°C von 100 bis 4000 mPas, einem Gehalt an Isocyanatgruppen von 15 bis 24 Gew.-% und einem Gehalt an monomerem HDI von weniger als 0,5 Gew.-%.

Unter "Lackpolyisocyanaten auf HDI-Basis" sind insbesondere Allophanat-, Biuret-, Isocyanurat-, Oxadiazin-, Uretdion- und/oder Urethangruppen aufweisende Derivate von HDI der an sich bekannten Art mit den vorstehend genannten Kenndaten zu verstehen. Als Komponente A1) geeignet sind somit beispielsweise Uretdion- und/oder Isocyanuratgruppen aufweisende Polyisocyanate der in EP-A-0 010 589, -0 089 297, -0 173 252, -0 178 520, -0 330 966, -0 337 116, -0 377 177, -0 456 062 und -0 495 307 oder den DE-OS'en 3 219 608 und 3 810 908 genannten Art, Biuretgruppen aufweisende Polyisocyanate der in EP-A-0 150 769 und -0 320 703, den US-P'en 3 903 127, 3 976 622 und 4 028 392 oder den DE-OS'en 2 808 801, 3 030 655 und 3 133 865 genannten Art, Allophanat- und gegebenenfalls Isocyanuratgruppen aufweisende Polyisocyanate der in EP-A-0 000 194, -0 496 208, -0 524 500, -0 524 501 und -0 566 037 genannten Art, Oxadiazingruppen aufweisende Polyisocyanate der in der DE-OS 1 670 666 genannten Art oder beliebige Gemische solcher Polyisocyanate.

Bevorzugt handelt es sich bei den Polyisocyanaten A1) um Lackpolyisocyanate mit Uretdion- oder Allophanat- und/oder Isocyanuratstruktur, die bei 23 °C eine Viskosität von 100 bis 1500 mPas und einen Gehalt an Isocyanatgruppen von 17 bis 24 Gew.-% aufweisen.

Besonders bevorzugt handelt es sich bei den Polyisocyanaten A1) um Uretdion- und Isocyanuratgruppen aufweisende Lackpolyisocyanate mit einer Viskosität bei 23°C von 100 bis 300 mPa.s mit einem Gehalt an Isocyanatgruppen von 19 bis 23 Gew.-% der in EP-A-0 337 116, -0 377 177 und -0 495 307 beispielhaft genannten Art oder um Allophanat- und Isocyanuratgruppen aufweisende Lackpolyisocyanate mit einer Viskosität bei 23°C von 100 bis 1200 mPa.s und einem Gehalt an Isocyanatgruppen von 17 bis 21 Gew.-% der in EP-A-0 496 208, -0 524 500, -0 524 501 und -0 566 037 beispielhaft genannten Art.

Bei den Polyisocyanaten A2) handelt es sich um Isocyanuratgruppen aufweisende Lackpolyisocyanate auf Basis cycloaliphatischer Diisocyanate, wie zum Beispiel 1-Isocyanato-3,3,5-trimethyl-5-isocyanatomethylcyclohexan (Isophorondiisocyanat; IPDI), 4,4'-Diisocyanatodicyclohexylmethan, 1,3- und 1,4-Diisocyanatocyclohexan, 2(4)-Methyl-1,3-diisocyanatocyclohexan, 1,4-Diisocyanatomethylcyclohexan oder 1-Isocyanato-1-methyl-4(3)-isocyanatomethylcyclohexan, oder beliebige Gemische solcher Diisocyanate mit einem Gehalt an Isocyanatgruppen von 10 bis 25 Gew.-% und einem Gehalt an monomeren Diisocyanaten von weniger als 0,5 Gew.-%, die bei 23 °C in fester Form vorliegen oder eine Viskosität von mehr als 200000 mPas aufweisen.

Die Herstellung solcher Isocyanuratgruppen aufweisender Polyisocyanate auf Basis cycloaliphatischer Diisocyanate ist bekannt und beispielsweise in EP-A-0 003 765, -0 017 998 oder -0 193 828 oder in den DE-OS'en 1 934 763 und 2 644 684 beschrieben.

Bevorzugt handelt es sich bei den Polyisocyanaten A2) um solche auf Basis von IPDI und/oder 4,4'-Diisocyanatodicyclohexylmethan mit einem Gehalt an Isocyanatgruppen von 12 bis 20 Gew.-%.

Besonders bevorzugte Polyisocyanate A2) sind solche auf Basis von IPDI mit einem Gehalt an Isocyanatgruppen von 15 bis 18 Gew.-%.

Die Herstellung der in den erfindungsgemäßen Beschichtungsmitteln vorliegenden Polyisocyanatkomponente A) erfolgt durch einfaches Vermischen der gegebenenfalls auf Temperaturen von 30 - 240 °C vorgeheizten Einzelkomponenten Al) und A2) im oben angegebenen Mengenverhältnis, vorzugsweise unter Einhaltung eines Gewichtsverhältnisses A1):A2) von 1,5:1 bis 8:1, besonders bevorzugt 2:1 bis 4:1, und anschließendes Rühren des Gemisches, bis zur Homogenität, wobei die Temperatur des Gemisches gegebenenfalls durch weiteres Erwärmen auf einer Temperatur von 30 bis 140 °C, vorzugsweise 40 bis 100 °C gehalten wird.

In einer bevorzugten Ausführungsform läßt man bei der Herstellung der Polyisocyanatkomponente A) die bei 23 °C hochviskose oder feste Polyisocyanatkomponente A2) unmittelbar nach ihrer Herstellung durch katalytische Trimerisierung cycloaliphatischer Diisocyanate im Anschluß an die Monomerenabtrennung durch Dünnschichtdestillation in noch erwärmtem Zustand, beispielsweise bei Temperaturen von 100 bis 240 °C, in die gegebenenfalls ebenfalls erwärmte Polyisocyanatkomponente A1) einfließen und rührt, gegebenenfalls unter weiterem Erwärmen bis zur Homogenität der Mischung.

In einer anderen, ebenfalls bevorzugten Ausführungsform rührt man bei der Herstellung der Polyisocyanatkomponente A) die Polyisocyanatkomponente A1) in die bei der Herstellung der Polyisocyanatkomponente A2) nach Beendigung der Trimerisierungsreaktion vorliegende Rohlösung noch vor der Dünnschichtdestillation ein und trennt erst anschließend die überschüssigen monomeren cycloaliphatischen Diisocyanate ab.

Die in den erfindungsgemäßen Beschichtungsmitteln enthaltene Polyisocyanatkomponente A) besitzt eine Viskosität bei 23 °C von 500 bis 12000 mPas, vorzugsweise 1000 bis 10000 mPas, besonders bevorzugt 2000 bis 8000 mPas, einen Gehalt an Isocyanatgruppen von 13 bis 24 Gew.-%, vorzugsweise 15 bis 23 Gew.-%, besonders bevorzugt 18 bis 22 Gew.-%, und einen Gehalt an monomeren Diisocyanaten von weniger als 0,5 Gew.-%.

Die in den erfindungsgemäßen Beschichtungsmitteln vorliegende Polyolkomponente B) weist eine mittlere OH-Funktionalität von 2 bis 4 und eine Viskosität bei 23 °C von weniger als 30000 mPas, vorzugsweise weniger als 10000 mPas, auf.

Als Polyolkomponente B) bzw. als Bestandteil der Polyolkomponente B) geeignet sind beispielsweise die an sich bekannten Polyhydroxylverbindungen vom Polyester-, Polyether-, Polycarbonat- oder Polyestercarbonattyp, Ricinusöl oder Abmischungen von Ricinusöl mit Keton/Formaldehyd-Kondensaten der in der GB-PS 1 182 884 oder EP-A-0 364 738 beschriebenen Art, oder um beliebige Gemische solcher Polyhydroxylverbindungen.

Als Polyolkomponente B) bzw. als Bestandteil der Polyolkomponente B) geeignete Polyesterpolyole sind beispielsweise solche eines mittleren, aus Funktionalität und Hydroxylzahl berechenbaren Molekulargewichtes von 200 bis 3000, vorzugsweise von 250 bis 2500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Zur Herstellung dieser Polyesterpolyole geeignete mehrwertige Alkohole sind insbesondere solche des Molekulargewichtsbereichs 62 bis 400 wie z. B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Die zur Herstellung der Polyesterpolyole verwendeten Säuren oder Säurederivate können aliphatischer, cycloaliphatischer und/oder heteroaromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellitsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole können auch beliebige Gemische dieser beispielhaft genannten Ausgangsverbindungen eingesetzt werden.

Eine als Polyolkomponente B) bzw. als Bestandteil der Polyolkomponente B) bevorzugt eingesetzte Art von Polyesterpolyolen sind jedoch solche, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Die Herstellung erfolgt im allgemeinen in Gegewart von Katalysatoren wie beispielsweise Lewis- oder Brönstedt-Säuren, organischen Zinn- oder Titanverbindungen bei Temperaturen von 20 bis 200°C, vorzugsweise 50 bis 160°C.

Als Polyolkomponente B) bzw. als Bestandteil der Polyolkomponente B) geeignete Polyetherpolyole sind beispielsweise solche eines mittleren, aus Funktionalität und Hydroxylzahl berechenbaren Molekulargewichtes von 200 bis 6000, vorzugsweise 250 bis 4000, mit einem Hydroxylgruppen-Gehalt von 0,6 bis 34 Gew.-%, vorzugsweise 1 bis 27 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, beispielsweise solche des Molekulargewichtsbereichs 62 bis 400, wie sie oben bei der Herstellung von Polyesterpolyolen beschrieben wurden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den als Polyolkomponente B) bzw. als Bestandteil der Polyolkomponente B) bevorzugt eingesetzten Polyetherpolyolen handelt es sich um solche, deren Alkylenoxideinheiten zu mindestens 80 mol-%, vorzugsweise jedoch ausschließlich aus Propylenoxideinheiten bestehen.

Als Polyolkomponente B) bzw. als Bestandteil der Polyolkomponente B) geeignete Polyhydroxylverbindungen vom Polycarbonattyp stellen insbesondere die an sich bekannten Polycarbonatdiole dar, wie sie sich beispielsweise durch Umsetzung von zweiwertigen Alkoholen, beispielsweise solchen, wie sie oben in der Liste der mehrwertigen Alkohole des Molekulargewichtsbereichs 62 bis 400 beispielhaft genannt sind, mit Diarylcarbonaten, wie z. B. Diphenylcarbonat, oder Phosgen herstellen lassen, und die ein aus Hydroxylgruppengehalt und -funktionalität errechenbares Molekulargewicht von 250 bis 1000 aufweisen.

Als Polyolkomponente B) bzw. als Bestandteil der Polyolkomponente B) geeignete Polyhydroxylverbindungen vom Polyestercarbonattyp sind insbesondere die an sich bekannten Estergruppen- und Carbonatgruppen aufweisende Diole, wie sie beispielsweise gemäß der Lehre der DE-AS 1 770 245 durch Umsetzung zweiwertiger Alkohole mit Lactonen der oben beispielhaft genannten Art, insbesondere ε-Caprolacton und anschließende Reaktion der dabei entstehenden Polyesterdiole mit Diphenylcarbonat erhalten werden können. Diese Polyhydroxylverbindungen weisen im allgemeinen ein aus Hydroxylgruppengehalt und -funktionalität errechenbares Molekulargewicht von 500 bis 3000 auf.

Die Polyolkomponente B) kann neben den beispielhaft genannten höhermolekularen Polyhydroxylverbindungen zur gezielten Einstellung der Viskosität der erfindungsgemäßen Zweikomponenten-Beschichtungsmittel auch bis zu 50 Gew.-%, vorzugsweise bis zu 20 Gew.-%, bezogen auf die Gesamtmenge an Polyolkomponente B), an einfachen mehrwertigen, gegebenenfalls Ethersauerstoff aufweisenden Alkoholen des Molekulargewichtsbereichs 62 bis 199, wie beispielsweise 1,2-Ethandiol, 1,2- und 1,3-Propandiol, 1,4-Butandiol, Diethylenglykol oder Dipropylenglykol oder beliebige Gemische derartiger einfacher mehrwertiger Alkohole enthalten.

In den erfindungsgemäßen Beschichtungsmitteln liegen die Komponenten A) und B) in solchen Mengenverhältnissen vor, die einem NCO-OH-Äquivalent von 0,7:1 bis 1,5:1 entsprechen.

Die Einzelkomponenten werden im Rahmen der gemachten Ausführungen vorzugsweise so gewählt, daß die durch Vermischen der Einzelkomponenten A) und B) erhaltenen Bindemittelgemische unmittelbar nach dem Vermischen eine Viskosität bei 23 °C von unter 30000, vorzugsweise von unter 10000 und besonders bevorzugt von unter 8000 mPas aufweisen. Durch geeignete Wahl der Ausgangsmaterialien und insbesondere auch der gegebenenfalls mitzuverwendenden Zusatzmittel (insbesondere Reaktionsbeschleuniger) wird außerdem dafür Sorge getragen, daß die Topfzeit der erfindungsgemäßen Beschichtungsmittel bei 20 Minuten bis 10 Stunden, vorzugsweise bei mindestens 40 Minuten liegt, wobei unter Topfzeit die Zeit bis zur Verdoppelung der Anfangsviskosität verstanden wird.

Die erfindungsgemäßen Beschichtungsmittel können außer den genannten zweikomponentigen Bindemitteln in der Beschichtungstechnologie übliche Hilfs- und Zusatzstoffe C) enthalten, wie beispielsweise Füllstoffe, Pigmente, Weichmacher, Härtungskatalysatoren, UV-Schutzmittel, Antioxidantien, Mikrobizide, Algizide, Wasserfänger, Thixotropieträger, Netzmittel, Verlaufshilfsmittel, Mattierungsmittel, Antirutschmittel, Entlüftungsmittel oder Extender. Die Hilfs- und Zusatzstoffe C) werden je nach den Erfordernissen der durch die Applikation der Beschichtung zu lösenden Probleme und ihrer Verträglichkeit in die A- und B-Komponente eingemischt. So sollten beispielsweise wasserhaltige oder stark alkalische reagierende Zusatzstoffe nicht der A-, sondern der B-Komponente zugemischt werden.

Geeignete Füllstoffe sind beispielsweise Stein- oder Kunststoffgranulate, Glaskugeln, Sand oder Kork, die gegebenenfalls in Mengen von bis zu 800 Gew.-% bezogen auf das aus den Einzelkomponenten A) und B) bestehende Bindemittelgemisch eingesetzt werden können.

Geeignete Pigmente sind beispielsweise Titandioxid, Zinkoxid, Eisenoxide, Chromoxide oder Ruße. Eine ausführliche Übersicht über Pigmente für Anstrichstoffe gibt das "Lehrbuch der Lacke und Beschichtungen, Band II, Pigmente, Füllstoffe, Farbstoffe", Kittel, Verlag W.A. Colomb in der Heenemann GmbH, Berlin-Oberschwandorf, 1974, S. 17-265. Die beispielhaft genannten Pigmente können, falls überhaupt, in Mengen von bis zu 100 Gew.-% bezogen auf das aus den Einzelkomponenten A) und B) bestehende Bindemittelgemisch eingesetzt werden.

Zur Viskositätseinstellung der gebrauchsfertigen Beschichtungsmittel können auch Weichmacher, mitverwendet werden. Geeignet sind beispielsweise Phthalsäure-, Adipinsäure- oder Phosphorsäureester von C₄-C₁₈-Alkanolen und/oder Vinylester von Alkarylsulfonsäuren, die, falls überhaupt, in Mengen von bis zu 30 Gew.-%, bezogen auf das aus den Einzelkomponenten A) und B) bestehende Bindemittelgemisch eingesetzt werden.

Die erfindungsgemäßen Beschichtungsmittel können auch Katalysatoren der aus der Polyurethanchemie an sich bekannten Art enthalten. Hierzu gehören beispielsweise die bekannten Blei- oder Wismutverbindungen, vorzugsweise die in diesem Zusammenhang bekannten Zinnverbindungen und tertiären Amine wie sie beispielsweise in "Kunststoff Handbuch 7, Polyurethane" Carl-Hanser-Verlag, München - Wien, 1984, S. 97-98, näher beschrieben sind. Derartige Katalysatoren können, falls überhaupt, in Mengen von bis zu 2 Gew.-%, bezogen auf das Gewicht des aus den Einzelkomponenten A) und B) bestehenden Bindemittels eingesetzt werden.

Weitere, in den erfindungsgemäßen Beschichtungsmitteln gegebenenfalls mitverwendete Hilfs- und Zusatzstoffe sind beispielsweise UV-Schutzmittel, Antioxidantien, Mikrobizide, Algizide, Wasserfänger, Thixotropieträger, Netzmittel, Verlaufsmittel, Mattierungsmittel, Antirutschmittel, Entlüftungsmittel oder Extender. Derartige Hilfs- und Zusatzmittel sind beispielsweise in "Lehrbuch der Lacke und Beschichtungen, Band III., Lösemittel, Weichmacher, Additive, Zwischenprodukte", H. Kittel, Verlag W.A. Colomb in der Heenemann GmbH, Berlin-Oberschwandorf, 1976, S. 237-398, beschrieben. Als Wasserfänger wirkende Trockenmittel sind beispielsweise in "Kunststoff Handbuch 7, Polyurethane", Carl-Hanser-Verlag, München - Wien, 1983, S. 545 näher beschrieben. Die Gesamtmenge derartiger weiterer Hilfs- und Zusatzstoffe beträgt im allgemeinen 0 bis 25 Gew.-%, bezogen auf das aus den Einzelkomponenten A) und B) bestehende Bindemittel.

Die Herstellung der erfindungsgemäßen Beschichtungsmittel erfolgt durch Vermischen der Einzelkomponenten, beispielsweise unter Verwendung der bekannten Dissolver oder Vakuumdissolver, die oftmals bevorzugt sind, um eine weitgehende Entgasung der Beschichtungsmittel zu erreichen.

Die erfindungsgemäßen lösemittelfreien Zweikomponenten-Polyurethan-Beschichtungsmittel eignen sich zur Beschichtung beliebiger Substrate, wie z. B. Beton, Metall, Kunststoff oder Holz, und lassen sich in hohen Schichtdicken von beispielsweise bis zu 5 mm nach an sich bekannten Methoden, wie Verspritzen, Rollen oder Spachteln applizieren.

Sie härten bereits bei Raumtemperatur blasenfrei zu licht- und wetterbeständigen Lackfilmen aus, die sich durch eine hohe Härte und Abriebbeständigkeit bei gleichzeitig höherer Elastizität und Reißfestigkeit auszeichnen, als die bekannten aliphatischen Beschichtungssysteme des Standes der Technik, die mit reinen HDI-Polyisocyanaten vernetzt werden.

Die erfindungsgemäßen Beschichtungsmittel eignen sich insbesondere zur Beschichtung mineralischer Untergründe, beispielsweise zur Herstellung hochabriebbeständiger Fußboden- oder Balkonbeschichtungen, als Flüssigkunststoff zur Dachabdichtung oder Betonsanierung oder auch als Bindemittel für dekorative Zierkiesmörtel.

Neben der beschriebenen Verwendung zur Herstellung von Überzügen auf beliebigen Substraten, lassen sich die erfindungsgemäßen Beschichtungsmittel als lösemittelfreie Zweikomponenten-Polyurethansysteme beispielsweise auch sehr vorteilhaft zur Herstellung lichtechter, harter Vergußmassen einsetzen.

Die folgenden Beispiele dienen zur weiteren Erläuterung der Erfindung. Alle Prozentangaben beziehen sich, soweit nichts anderslautendes vermerkt, auf Gewichtsprozent.

### Beispiele

### Ausgangskomponenten

### Polyisocyanatkomponente 1

1332 g (6 mol) IPDI werden in einem Dreihalskolben vorgelegt und auf 50 °C erwärmt. Aus einem Tropftrichter läßt man als Katalysator 10 ml einer 6 %igen Lösung von 2-Hydroxyethyl-trimethylammoniumhydroxid in einer Mischung aus 2-Ethylhexanol und Methanol (Volumenverhältnis = 4:1) zulaufen. Die Temperatur steigt innerhalb von ca. 30 min auf 75 °C an. Man heizt das Reaktionsgemisch auf 80 °C und rührt 30 min bei dieser Temperatur nach, bis der NCO-Gehalt auf 31,1 % gesunken ist.

In die nun vorliegende Rohlösung eines IPDI-Polyisocyanuratpolyisocyanates rührt man anschließend 970 g eines gemäß Beispiel 2 der EP-A-0 377 177 hergestellten Uretdion- und Isocyanuratgruppen-haltigen HDI-Polyisocyanates mit einem NCO-Gehalt von 22,5 %, einer Viskosität bei 23 °C von 170 mPas und einem Gehalt an monomerem HDI von 0,2 % homogen ein und trennt das überschüssige monomere IPDI bei einer Temperatur von 170 °C und einem Druck von 0,1 mbar durch Dünnschichtdestillation ab. Man erhält 1450 g eines praktisch farblosen Polyisocyanatgemisches mit einem Isocyanatgehalt von 20,4 %, einer Viskosität bei 23 °C von 3400 mPas sowie einem Gehalt an monomerem IPDI von 0,2 % und an monomerem HDI von 0,1 %. Das Produkt besteht zu etwa 67 % aus HDI- und zu 33 % aus IPDI-Polyisocyanat.

### Polyisocyanatkomponente 2

1332 g IPDI werden nach dem bei der Herstellung von Polyisocyanatkomponente 1 beschriebenen Verfahren bis zu einem NCO-Gehalt von 31,2 % trimerisiert. Anschließend rührt man 970 g eines gemäß Beispiel 4 der EP-A-0 496 208 hergestellten Allophanat- und Isocyanuratgruppen-haltigen HDI-Polyisocyanates mit einem NCO-Gehalt von 19,8 %, einer Viskosität bei 23 °C von 520 mPas und einem Gehalt an monomerem HDI von 0,3 % homogen in die Rohlösung ein und trennt das überschüssige monomere IPDI bei einer Temperatur von 170 °C und einem Druck von 0,1 mbar durch Dünnschichtdestillation ab. Man erhält 1443 g eines praktisch farblosen Polyisocyanatgemisches mit einem Isocyanatgehalt von 18,7 %, einer Viskosität bei 23 °C von 6800 mPas sowie einem Gehalt an monomerem IPDI von 0,3 % und an monomerem HDI von 0,1 %. Das Produkt besteht zu etwa 67 % aus HDI- und zu 33 % aus IPDI-Polyisocyanat.

### Polyisocyanatkomponente 3 (Vergleich)

500 g eines gemäß Beispiel 7 der EP-A-0 330 966 hergestellten, Isocyanuratgruppen-haltigen HDI-Polyisocyanates mit einem NCO-Gehalt von 21,7 %, einer Viskosität bei 23 °C von 3000 mPas und einem Gehalt an monomerem HDI von 0,1 % werden bei Raumtemperatur mit 1000 g eines gemäß Beispiel 2 der EP-A-0 377 177 hergestellten Uretdion- und Isocyanuratgruppen-haltigen HDI-Polyisocyanates mit einem NCO-Gehalt von 22,5 %, einer Viskosität bei 23 °C von 170 mPas und einem Gehalt an monomerem HDI von 0,2 % versetzt und anschließend bis zu Homogenität der Mischung gerührt. Man erhält ein Polyisocyanatgemisch mit einem NCO-Gehalt von 22,2 %, einer Viskosität bei 23°C von 500 mPas und einem Gehalt an monomerem HDI von 0,2 %. Das Gemisch besteht ausschließlich aus HDI-Polyisocyanaten.

### Polyolkomponente 1

Mischung aus 75 mol-% Rizinusöl und 25 mol-% eines Cyclohexanon-Formaldehyd-Kondensationsproduktes mit einer Viskosität bei 23 °C von ca. 3500 mPas und einem OH-Gehalt von 4,8 %.

### Polyolkomponente 2

Mischung aus 60 mol-% Rizinusöl, 20 mol-% eines Cyclohexanon-Formaldehyd-Kondensationsproduktes und 20 mol-% eines durch Propoxylierung von 1,1,1-Trimethylolpropan (TMP) hergestellten Polyetherpolyols eines mittleren Molekulargewichtes von 305 mit einer Viskosität bei 23 °C von ca. 3000 mPas und einem OH-Gehalt von 7,1 %.

### Polyolkomponente 3

Durch Propoxylierung von TMP hergestelltes Polyetherpolyol mit einem mittleren Molekulargewicht von 450, einer Viskosität bei 23 °C von ca. 600 mPas und einem OH-Gehalt von 11,7 %.

### Polyolkomponente 4

Auf TMP gestartetes Poly-ε-caprolacton-Polyol mit einer Viskosität bei 23 °C von ca. 3000 mPas und einem OH-Gehalt von 17 %.

### Polyolkomponente 5

Auf 1,4-Butandiol gestartetes Poly-ε-caprolacton-diol mit einer Viskosität bei 23°C von 2800 mPas und einem OH-Gehalt von 8,5 %.

### Beispiel 1

100 Gew.-Teile Polyolkomponente 1 werden mit 0,02 Gew.-Teilen Dibutylzinndilaurat (DBTL) als Katalysator und 1 Gew.-Teil eines handelsüblichen Entschäumers ®Bevaloid 6420 (Fa. Erbslöh, Krefeld) mit einem Dissolver 5 Minuten bei einer Drehgeschwindigkeit von 15 bis 20 ms⁻¹ vermischt. Anschließend fügt man 58 Gew.-Teile der Polyisocyanatkomponente 1 (entsprechend einem Äquivalentverhältnis von NCO:OH = 1:1) hinzu und mischt weitere 5 Minuten im Dissolver. Das nun vorliegende erfindungsgemäße lösemittelfreie Beschichtungsmittel mit einer Anfangsviskosität bei 23 °C von 4000 mPas und einer Topfzeit von 30 Minuten wird auf eine mit einem Trennmittel behandelte Aluminiumplatte gegossen und mit einem Zahnspachtel bis auf eine Schichtdicke von ca. 1 mm ausgestrichen.

Nach 8stündiger Aushärtung bei Raumtemperatur erhält man eine transparente Beschichtung mit folgenden Eigenschaften:

| | |
|---|---|
| Härte Shore A | 74 |
| Reißdehnung | 142 % |
| Reißfestigkeit | 7,8 N/mm² |
| Weiterreißfestigkeit | 9,7 N/mm |

### Beispiel 2 (Vergleich)

Nach dem in Beispiel 1 beschriebenen Verfahren wird aus 100 Gew.-Teilen Polyolkomponente 1, 0,02 Gew.-Teilen DBTL, 1 Gew.-Teil des handelsüblichen Entschäumers ®Bevaloid 6420 (Fa. Erbslöh, Krefeld) und 53 Gew.-Teilen der Polyisocyanatkomponente 3 (entsprechend einem Äquivalentverhältnis von NCO:OH = 1:1) ein lösemittelfreies Beschichtungsmittel mit einer Anfangsviskosität bei 23°C von 3500 mPa.s und einer Topfzeit von 20 min formuliert, auf eine mit einem Trennmittel behandelte Aluminiumplatte gegossen und mit einem Zahnspachtel bis auf eine Schichtdicke von ca. 1 mm ausgestrichen.

Nach 8stündiger Aushärtung bei Raumtemperatur erhält man eine transparente Beschichtung mit folgenden Eigenschaften:

| | |
|---|---|
| Härte Shore A | 62 |
| Reißdehnung | 65 % |
| Reißfestigkeit | 3,1 N/mm² |
| Weiterreißfestigkeit | 3,8 N/mm |

Der Vergleich zeigt, daß die unter Verwendung des erfindungsgemäßen Beschichtungsmittels erhaltene Beschichtung einer analog unter ausschließlicher Verwendung von HDI-Polyisocyanaten hergestellten Beschichtung sowohl hinsichtlich Härte als auch hinsichtlich Elastizität deutlich überlegen ist.

### Beispiel 3 bis 6

Nach dem in Beispiel 1 beschriebenen Verfahren werden lösemittelfreie Beschichtungsmittel mit folgenden Zusammensetzungen (Gew.-Teile) und Eigenschaften hergestellt (jeweils Äquivalentverhältnis NCO:OH = 1:1):

| Beispiel | 3 | 4 (Vergleich) | 5 | 6 (Vergleich) |
|---|---|---|---|---|
| Polyisocyanatkomponente 1 | - | - | 142 | - |
| 2 | 94 | - | - | - |
| 3 | - | 79 | - | 130 |
| Polyolkomponente 2 | 100 | 100 | - | - |
| 3 | - | - | 100 | 100 |
| DBTL | 0,02 | 0,02 | 0,02 | 0,02 |
| Bevaloid 6420 | 1 | 1 | 1 | 1 |
| Anfangsviskosität (23°C) | 4800 | 2200 | 2300 | 600 |
| Topfzeit (min) | 45 | 25 | 60 | 35 |

Die Beschichtungsmittel werden jeweils auf eine mit Trennmittel behandelte Aluminiumplatte gegossen und mit einem Zahnspachtel bis auf eine Schichtdicke von ca. 1 mm ausgestrichen. Nach 8stündiger Aushärtung bei Raumtemperatur erhält man transparente Beschichtungen, die folgende lacktechnische Eigenschaften aufweisen:

| Beispiel | 3 | 4 (Vergleich) | 5 | 6 (Vergleich) |
|---|---|---|---|---|
| Härte Shore A/D | 83/27 | 77/21 | -/50 | -/37 |
| Reißdehnung (%) | 127 | 80 | 94 | 68 |
| Reißfestigkeit (N/mm²) | 13,4 | 6,5 | 13,2 | 7,3 |
| Weiterreißfestigkeit (N/mm) | 18,1 | 8,6 | 40,8 | 17,5 |

### Beispiel 7 (Balkonbeschichtung)

Jeweils 12,0 Gew.-Teile der Polyolkomponenten 4 und 5 werden zusammen mit 27,3 Gew.-Teilen Schwerspat EWO (Fa. Deutsche Barytindustrie, Bad Laufenberg) als Füllstoff, 5,0 Gew.-Teilen eines handelsüblichen Trockenmittels ®Baylith L-Paste (Fa. Bayer AG, Leverkusen), 0,2 Gew.-Teilen einer 10 %igen Katalysatorlösung von DBTL in Methoxypropylacetat sowie 0,3 Gew.-Teilen eines handelsüblichen Entschäumers ®Bevaloid 6420 (Fa. Erbslöh, Krefeld) 10 Minuten im Vakuumdissolver gemischt. Anschließend gibt man 41,0 Gew.-Teile der Polyisocyanatkomponente 1 hinzu und mischt weitere 5 Minuten im Vakuumdissolver.

Die nun vorliegende erfindungsgemäße lösungsmittelfreie Beschichtungsmasse mit einer Topfzeit von 40 Minuten wird auf Beton gegossen und mit dem Zahnspachtel verteilt. Nach einer Aushärtezeit von 8 Stunden bei Raumtemperatur findet man beieiner Schichtdicke von ca. 2 mm folgende lacktechnischen Eigenschaften:

| | |
|---|---|
| Härte Shore D | 60 |
| Reißdehnung | 87 % |
| Reißfestigkeit | 33 N/mm² |
| Weiterreißfestigkeit | 64 N/mm |

## Patentansprüche

1. Lösemittelfreie Zweikomponenten-Polyurethan-Beschichtungsmittel, bestehend im wesentlichen aus
A) einer Polyisocyanatkomponente,
B) einer Polyolkomponente und gegebenenfalls
C) in der Beschichtungstechnologie üblichen Hilfs- und Zusatzstoffen,
wobei die Komponenten A) und B) in einem NCO/OH-Äquivalentverhältnis von 0,7:1 bis 1,5:1 entsprechenden Mengen vorliegen, dadurch gekennzeichnet,
daß die Polyisocyanatkomponente A) eine Viskosität bei 23°C von 500 bis 12000 mPas, einen Gehalt an Isocyanatgruppen von 13 bis 24 Gew.-% und einen Gehalt an monomeren Diisocyanaten von weniger als 0,5 Gew.-% aufweist und aus einem Gemisch aus
A1) 50 bis 95 Gew.-% an Lackpolyisocyanaten auf Basis von 1,6-Diisocyanatohexan mit einer Viskosität bei 23°C von 100 bis 4000 mPa.s und einem Gehalt an Isocyanatgruppen von 16 bis 24 Gew.-% und
A2) 5 bis 50 Gew.-% an Isocyanuratgruppen aufweisenden Polyisocyanaten auf Basis cycloaliphatischer Diisocyanate
besteht.

2. Lösemittelfreie Zweikomponenten-Polyurethan-Beschichtungsmittel gemäß Anspruch 1, dadurch gekennzeichnet, daß die Komponente A1) aus Uretdion- oder Allophanat- und/oder Isocyanuratgruppen aufweisenden Lackpolyisocyanaten auf Basis von 1,6-Diisocyanatohexan mit einer Viskosität bei 23 °C von 100 bis 1500 mPas und einem Gehalt an Isocyanatgruppen von 17 bis 24 Gew.-% besteht.

3. Lösemittelfreie Zweikomponenten-Polyurethan-Beschichtungsmittel gemäß Anspruch 1, dadurch gekennzeichnet, daß die Komponente A1) aus Uretdion- und Isocyanuratgruppen aufweisenden Lackpolyisocyanaten auf Basis von 1,6-Diisocyanatohexan mit einer Viskosität bei 23 °C von 100 - 300 mPas und einem Gehalt an Isocyanatgruppen von 19 bis 23 Gew.-% besteht.

4. Lösemittelfreie Zweikomponenten-Polyurethan-Beschichtungsmittel gemäß Anspruch 1, dadurch gekennzeichnet, daß die Komponente A1) aus Allophanat- und Isocyanuratgruppen aufweisenden Lackpolyisocyanaten auf Basis von 1,6-Diisocyanatohexan mit einer Viskosität bei 23 °C von 100 bis 1200 mPas und einem Gehalt an Isocyanatgruppen von 17 bis 21 Gew.-% besteht.

5. Lösemittelfreie Zweikomponenten-Polyurethan-Beschichtungsmittel gemäß Anspruch 1 bis 4, dadurch gekennzeichnet, daß die Komponente A2) aus Isocyanuratgruppen aufweisenden Lackpolyisocyanaten auf Basis von 1-Isocyanato-3,3,5-trimethyl-5-isocyanatomethylcydohexan besteht.

6. Verwendung der Zweikomponenten-Polyurethan-Beschichtungsmittel gemäß Anspruch 1 bis 5 zur lösemittelfreien Beschichtung beliebiger Substrate.

7. Verwendung der Zweikomponenten-Polyurethan-Beschichtungsmittel gemäß Anspruch 1 bis 5 zur lösemittelfreien Balkon- oder Dachabdichtung.

## Claims

1. Solvent-free two-component polyurethane coating materials consisting essentially of
A) a polyisocyanate component,
B) a polyol component and optionally
C) auxiliary substances and additives conventional in coating technology,
wherein the components A) and B) are present in quantities corresponding to an NCO/OH equivalent ratio of from 0.7:1 to 1.5:1, characterised in that
the polyisocyanate component A) has a viscosity at 23°C of from 500 to 12000 mPa.s, a content of isocyanate groups of from 13 to 24% by weight and a content of monomeric diisocyanates of less than 0.5% by weight and consists of a mixture of
A1) 50 to 95% by weight of coating polyisocyanates based on 1,6-diisocyanatohexane having a viscosity at 23°C of from 100 to 4000 mPa.s and a content of isocyanate groups of from 16 to 24% by weight and
A2) 5 to 50% by weight of polyisocyanates having isocyanurate groups and based on cycloaliphatic diisocyanates.

2. Solvent-free two-component polyurethane coating materials according to claim 1, characterised in that the component A1) consists of coating polyisocyanates based on 1,6-diisocyanatocyclohexane and having uretdione groups or allophanate groups and/or isocyanurate groups, a viscosity at 23°C of from 100 to 1500 mPa.s and a content of isocyanate groups of from 17 to 24% by weight.

3. Solvent-free two-component polyurethane coating materials according to claim 1, characterised in that the component A1) consists of coating polyisocyanates based on 1,6-diisocyanatocyclohexane and having uretdione groups and isocyanurate groups, a viscosity at 23°C of from 100 to 300 mPa.s and a content of isocyanate groups of from 19 to 23% by weight.

4. Solvent-free two-component polyurethane coating materials according to claim 1, characterised in that the component A1) consists of coating polyisocyanates based on 1,6-diisocyanatocyclohexane and having allophanate groups and isocyanurate groups, a viscosity at 23°C of from 100 to 1200 mPa.s and a content of isocyanate groups of from 17 to 21% by weight.

5. Solvent-free two-component polyurethane coating materials according to claims 1 to 4, characterised in that the component A2) consists of coating polyisocyanates containing isocyanurate groups and based on 1-isocyanato-3,3,5-trimethyl-5-isocyanatomethylcyclohexane.

6. Use of the two-component polyurethane coating materials according to claims 1 to 5 for the solvent-free coating of any substrates.

7. Use of the two-component polyurethane coating materials according to claims 1 to 5 for the solvent-free sealing of balconies or roofs.

## Revendications

1. Produits de revêtement sans solvant, à deux composants, à base de polyuréthanne, consistant essentiellement en
A) un composant polyisocyanate,
B) un composant polyol et le cas échéant
C) des produits auxiliaires et additifs usuels dans l'industrie des peintures et vernis,
les composants A et B étant présents en quantités correspondant à un rapport de 0,7:1 à 1,5:1 entre les équivalents de NCO et les équivalents d'OH, ces produits se caractérisant en ce que
le composant polyisocyanate A a une viscosité de 500 à 12000 mPa.s à 23°C, une teneur en groupes isocyanate de 13 à 24 % en poids et une teneur en diisocyanates monomères inférieure à 0,5 % en poids, et consiste en un mélange de
A1) 50 à 95 % en poids de polyisocyanates pour vernis à base du 1,6-diisocyanatohexane, ayant une viscosité de 100 à 4000 mPa.s à 23°C et une teneur en groupes isocyanate de 16 à 24 % en poids et
A2) 5 à 50 % en poids de polyisocyanates à groupes isocyanurate à base de diisocyanates cycloaliphatiques.

2. Produits de revêtement sans solvant, à deux composants, à base de polyuréthanne selon la revendication 1, caractérisés en ce que le composant A1 consiste en polyisocyanates pour vernis, à groupes uret-dione ou allophanate et/ou isocyanurate, à base du 1,6-diisocyanatohexane, ayant une viscosité de 100 à 1500 mPa.s à 23°C et une teneur en groupes isocyanate de 17 à 24 % en poids.

3. Produits de revêtement sans solvant, à deux composants, à base de polyuréthanne, selon la revendication 1, caractérisés en ce que le composant A1 consiste en polyisocyanates pour vernis, à groupes uret-dione et isocyanurate, à base du 1,6-diisocyanatohexane, ayant une viscosité de 100 à 300 mPa.s à 23°C et une teneur en groupes isocyanate de 19 à 23 % en poids.

4. Produits de revêtement sans solvant, à deux composants, à base de polyuréthanne, selon la revendication 1, caractérisés en ce que le composant A1 consiste en polyisocyanates pour vernis, à groupes allophanate et isocyanurate, à base du 1,6-diisocyanatohexane, ayant une viscosité de 100 à 1200 mPa.s à 23°C et une teneur en groupes isocyanate de 17 à 21 % en poids.

5. Produits de revêtement sans solvant, à deux composants, à base de polyuréthanne, selon les revendications 1 à 4, caractérisés en ce que le composant A2 consiste en polyisocyanates pour vernis, à groupes isocyanurate, à base du 1-isocyanato-3,3,5-triméthyl-5-isocyanatométhylcyclohexane.

6. Utilisation des produits de revêtement à deux composants, à base de polyuréthanne, selon les revendications 1 à 5 pour l'application sans solvant de revêtements sur des supports quelconques.

7. Utilisation des produits de revêtements à deux composants, à base de polyuréthannes, selon les revendications 1 à 5, pour la réalisation de l'étanchéité, sans solvant, de balcons ou toitures.
